# EUROPEAN PATENT APPLICATION

(11) **EP 4 840 834 A1**
(43) Date of publication of application: **18.11.2026**
(21) Application number: 25305692.3
(22) Date of filing: 15.05.2025
(51) Int. Cl.: C04B 11/02

(54) **HEAT RECOVERY**

(71) Applicant: Saint-Gobain Placo, 92400 Courbevoie (FR)
(72) Inventor: HIEL BERAUD, Hugo, 92400 Courbevoie (FR); MONTIGNY, Benoit, 92400 Courbevoie (FR); MAGAUD, Lionel, 84300 Cavaillon (FR); FRANCY, Olivier, 84300 Cavaillon (FR)
(74) Representative: Murgitroyd & Company

(57) **Abstract**

A system for producing alpha calcium sulphate hemihydrate via a wet calcination process is provided. The system comprises a mixing stage for providing a gypsum slurry, a reactor stage for calcining the gypsum slurry to an alpha hemihydrate slurry and a dewatering stage for removing water from the alpha hemihydrate slurry. The system comprises a water output in the dewatering stage which is fluidly connected to a heat pump. The output of the heat pump is used as a heat source to reduce the energy requirements of the system.

## Description

### FIELD OF THE DISCLOSURE

The present disclosure generally relates to a system and method for producing alpha hemihydrate via a wet calcination process. More specifically, the present disclosure relates to a system and method for producing alpha hemihydrate via a wet calcination process whereby water extracted during the wet calcination process are recycled back into the system and method to provide a more energy efficient process. Namely, the latent and sensible heat of the water is used as a heating source to reduce the energy requirements for heating in the system.

### BACKGROUND TO THE INVENTION

Gypsum occurs naturally as a raw material in the form of calcium sulphate dihydrate. Gypsum containing products, such as plasterboard, are prepared by forming a mixture of calcined or dehydrated gypsum, namely calcium sulphate hemihydrate, with water, to form a settable slurry which can then be cast into a pre-determined shape. The hemihydrate reacts with the water and becomes re-hydrated to the dihydrate crystal, which is then cured or dried to the solid state.

The hemihydrate form of gypsum is known to depend on the calcination process, and is categorised into two basic forms, the alpha-hemihydrate and the beta-hemihydrate. The beta-hemihydrate is typically formed by heating gypsum under atmospheric conditions, to drive off any moisture and chemically combined water to form dried crystals, which may then be ground to a fine powder. The beta-hemihydrate has long been the favoured hemihydrate in the production of gypsum wall boards or plasterboards, owing to the rapid re-hydration of the ground crystal in forming the slurry. However, the gypsum product derived from the beta-hemihydrate is typically soft and the beta-hydrate requires large volumes of water to produce the required slurry fluidity.

The alpha-hemihydrate is formed by heating gypsum under pressure to similarly remove the water associated therewith. The gypsum product derived from the alpha-hemihydrate however, is found to be harder and comprises a higher strength and density compared with beta-hemihydrate derived gypsum.

It is necessary to use substantial amounts of water and heat energy in wet calcination processes. Wet calcination processes can therefore be very energy intensive. It is thus an aim of the present invention to improve the energy efficiency of wet calcination process of alpha calcium sulphate hemihydrate.

### SUMMARY OF THE INVENTION

In a first aspect, a system is provided for producing alpha calcium sulphate hemihydrate via a wet calcination process. The system comprising:
a mixing stage in fluid communication with a gypsum source and one or more water sources, wherein the mixing stage is configured to mix gypsum with water and output a gypsum slurry;
a reactor stage in fluid communication with the mixing stage, wherein the reactor stage is configured to convert the gypsum slurry into an alpha hemihydrate slurry;
a dewatering stage in fluid communication with the reactor stage, wherein the dewatering stage is configured to remove water from the alpha hemihydrate slurry, wherein the dewatering stage comprises an output for outputting an alpha hemihydrate product;
a heat pump comprising an input and an output; wherein the dewatering stage comprises a water output, the water output in fluid communication with the heat pump input, and the heat pump output in fluid communication with the water source, the mixing stage, and/or the reactor stage, wherein the heat pump is configured to provide the output with a higher temperature than the input; and
wherein the heat pump is configured to extract heat from the water output of the dewatering stage to heat a carrier medium as the heat pump output.

As noted above, the production of alpha hemihydrate products is an energy intensive process requiring various stages of heating as well as large quantities of water. The first aspect thus provides a novel system for the manufacture of alpha calcium sulphate hemihydrate that redirects the steam and/or water used in dewatering stage to a heat pump such that the latent and/or sensible heat energy stored therein can be recycled and used as a heat source for at least one of the preceding stages in the manufacturing process. The thermal heat provided by the output of the heat pump has surprisingly been found to be less than the electrical energy consumed by the heat pump. As such, the energy requirements of the system are reduced and the energy efficiency of the system is improved, thus allowing alpha hemihydrate products to be produced with lower environmental impact (e.g. with a reduced CO₂ footprint, with reduced water consumption) and more economically. Systems of the first aspect therefore can also provide higher temperatures in the water source, the mixing stage, and/or the reactor stages while using the same amount of external energy as systems of the prior art. In this way, the system of the first aspect is particularly advantageous for the wet calcination of calcium sulphate dihydrate to alpha calcium sulphate hemihydrate and may improve calcination rate. The present invention allows for the reuse of heat in systems with a higher temperature difference between a heat source and a heat sink than systems of the prior art. In this way, the present invention is adapted for the calcination of calcium sulphate dihydrate to alpha calcium sulphate hemihydrate.

For the avoidance of doubt, heat sink (the consumer) can be liquid water or steam, and the heat source, i.e. the water removed from the dewatering stages, may be liquid water or steam.

The following features and embodiments may be combined in any suitable and/or desirable way to provide an embodiment of the first aspect falling within the scope of the appended claims.

In some embodiments, heat pump is an indirect type heat pump comprising a closed loop where the circulating refrigerant fluid is alternatively evaporated at contact with heat source and condensed at contact with heat sink, therefore transferring at each cycle heat from source to the sink ie the process steam or water.

The heat pump is configured to extract heat from the water output of the dewatering stage to heat a carrier medium, such as dry air, additional water, additional steam, or thermal oil. In this way, the system forms an open steam loop with additional steam supplied to the system. In some embodiments, the additional steam supplied may comprise steam from or to another component of a gypsum product production system. For example, the additional steam may be supplied to a dryer in a gypsum plasterboard production system. In this way, the overall energy requirements of the calcination and product production system may be reduced. Additionally, in this way any impurities carried from the water output of dewatering stage carried through the to the heat pump output would not be reintroduced into the gypsum slurry. In this way, the system may provide an output with reduced water soluble impurities.

Preferably, the heat pump is configured to provide the output of the heat pump with a temperature at least 90°C higher than the water output from the dewatering stage. In this way, the system provides a large increase in the temperature of the water output from the dewatering stage. The system therefore provides additional heat to the water source, the mixing stage, and/or the reactor stage in an energy efficient manner. Preferably, the heat pump is configured to provide the output of the heat pump with a temperature up to 160 °C higher than the water output from the dewatering stage. In this way, the system is configured to use only the energy required and reduce waste.

In some embodiments, the system is configured to heat the water source, the mixing stage, and/or the reactor stage using the output of the heat pump indirectly. For example, the steam output of the heat pump may be used to fill a thermal heat jacket surrounding one or a plurality of tanks that form part of the system (e.g. a mixing tank and/or a reactor tank). In this way, the output of the heat pump can be used to heat the mixing and/or reactor stage without changing the water content of the mixing and/or reactor stage.

In alternative embodiments, the system is configured to heat the water source, the mixing stage, and/or the reactor stage using the output of the heat pump directly. For example, the steam output of the heat pump may be injected or mixed into a component of the system (e.g. the liquid water) or one or more of a plurality of tanks of the system (e.g. a mixing tank and/or reactor). In this way, the water requirement of the system may be reduced. Additionally, the direct heating of the water source, the mixing stage, and/or the reactor stage may provide a more energy efficient system with less heat lost through heating additional thermal carriers such as the outer of a tank of the system.

In some embodiments, the output of the heat pump is in fluid communication with both the mixing stage and the reactor stage. In this way, the heat extracted from the dewatering stage can be reused to heat both the mixing and the reactor stages.

In some embodiments, the output of the heat pump is in fluid communication with both the water source and the reactor stage. In this way, the heat extracted from the dewatering stage can be reused to heat both the water source and the reactor stage.

In some embodiments, the output of the heat pump is in fluid communication with both the water source and the mixing stage. In this way, the heat extracted from the dewatering stage can be reused to heat both the water source and the mixing stage. In the way, heat may be extracted from the higher temperature dewatering stage to be reused in the lower temperature water source and mixing stage.

In some embodiments, the output of the heat pump is in fluid communication with all of the water source, the mixing stage, and the reactor stage. In this way, the heat extracted from the dewatering stage can be reused to heat the water source, the mixing stage and the reactor stage.

As noted above, the mixing stage is in fluid communication with a gypsum source and one or more water sources. It will be appreciated that the gypsum (supplied from the gypsum source) and the water (supplied from the one or more water sources) may be supplied to the mixing stage in any suitable and/or desirable way. For example, the system may further comprise one or more pumps associated with one or each of the gypsum source and the water sources such that the gypsum and water is pumped into the mixing stage via a conduit.

Optionally, the mixing stage is a mixing tank. Optionally the mixing stage (e.g. the mixing tank) comprises a mixing means configured to mix (e.g. combine or blend) the gypsum with water and provide the gypsum slurry. The mixing means may be any suitable and/or desirable means such as a paddle mixer, a rotor/stator, a high-frequency vibrator or plate, and so on.

The water supplied to the mixing stage is supplied from one or more water sources. Optionally, the mixing stage is supplied by an internal (e.g. recycled) water source and an external water source. The internal water source may be liquid water output from the dewatering stage. As such, the internal water source comprises recirculated water that has already passed through the system at least once. However, not all of the water that is combined with the gypsum to provide the gypsum slurry in the mixing stage is recovered (e.g. removed) from the alpha hemihydrate during the dewatering stage. Furthermore, some of the water is recovered as steam rather than liquid water. As such, to ensure that enough water is supplied to the mixing stage to provide a gypsum slurry of a desirable consistency, an external water source may also be used to top-up (e.g. supplement) the water from the internal water source. In some such embodiments, the system is configured to use the heat pump output to increase the temperature of the recirculated water. In this way, the water requirements and the energy requirements of the system are reduced.

Optionally, the one or more water sources may supply pre-heated water (that is, water at a temperature above room temperature) into the mixing stage. As such, optionally, one or more of the water sources may comprise a heating means configured to heat the water contained therein to a desirable temperature before the water is supplied to the mixing stage. Optionally, the system may be configured to use the output of the heat pump to preheat the water supplied to the mixing stage. In this way, a more energy efficient system is provided.

Optionally, the system may further comprise a container in fluid communication with the liquid water output of the dewatering stage, wherein the container is configured to collect and store the liquid water output from the dewatering stage. The container thus provides a water source for the mixing stage. The output of the dewatering stage may also be in fluid communication with the container such that that the latent and sensible heat of the steam is used as a heating source to reduce the energy requirements for heating in the system.

Once the gypsum slurry has been produced, the gypsum slurry is passed to the reactor stage (e.g. via a conduit) where the gypsum slurry is converted into an alpha hemihydrate slurry. Calcination processes are well known in the art, and any suitable and/or desirable wet calcination process may be used in combination with the present system to provide an alpha hemihydrate slurry.

Optionally, the reactor stage is configured to operate at an elevated temperature and/or pressure. Optionally, the reactor stage is configured to heat the gypsum slurry to an elevated temperature in the range of 110°C to 170°C, preferably in the range of 120°C to 160°C, more preferably in the range of 130°C to 150°C. Optionally, the reactor stage is configured to pressurise the gypsum slurry (and/or the environment in which the gypsum slurry is located) to an elevated pressure from 1.5 bar to 10 bar, preferably 2 bar to 8 bar, more preferably 3 bar to 5 bar.

Optionally, the system is configured to provide a heat pump output with a temperature in the range of 100°C to 250°C, preferably in the range of 120°C to 220°C, more preferably in the range of 180°C to 220°C, and more preferably in the range of 190°C and 210°C. In this way, the output of the heat pump may be used to provide the preferable temperatures of the reactor stage. In some embodiments, the heat carrier medium is air or steam. In embodiments using air as the heat carrier medium, the system preferably provides the heat pump output with a temperature in the range of 100°C to 200°C, more preferably 120°C to 170°C, more preferably 140°C to 160°C, and most preferably at approximately 150°C. In embodiments using steam as the heat carrier medium, the system preferably provides the heat pump output with a temperature in the range of 120°C to 250°C, more preferably in the range of 140°C to 220°C, more preferably 160°C to 200°C, most preferably at approximately 180°C.

Optionally, the system is configured to remove water at a predetermined temperature from the dewatering stage to provide the water output. Optionally, the predetermined temperature is from 40 to 110 °C, e.g. from 50 to 100 °C, e.g. from 40 to 90 °C.

Optionally, the reactor stage comprises one or more (e.g. two, e.g. a plurality) of reactor units. Optionally, two or more reactor units are arranged in series. For example, a plurality of reactor units in series may be used to segment the calcination process into a plurality of sequential steps. For example, one or more reactor units may be used to heat the gypsum slurry to a desired temperature in a step-wise manner. This can, for example, help to ensure even heating throughout the gypsum slurry. Optionally, at least one (e.g. one, e.g. a first) reactor unit may be used to heat the gypsum slurry and at least one (e.g. one, e.g. a second) reactor unit may be used to pressurise the gypsum slurry (or the environment around which the gypsum slurry is located). Optionally, heating and pressurisation may occur within one (e.g. a single) reactor unit.

In some such embodiments, the output of the heat pump is in fluid communication with one or more of the plurality of reactor units. In some such embodiments, the output of the heat pump is in fluid communication with each of the plurality of reactor units. In this way, the system is configured to reuse heat from the dewatering stage in each of the reactor units.

In some embodiments, the system comprises a plurality of heat pumps configured to receive the water output from the dewatering stage and provide a heat pump output with an increased temperature to the water source, the mixing stage, and/or reactor stage. In this way, a plurality of heat pumps can be used to provide a more energy efficient system. In some such embodiments, the plurality of heat pumps may be used to form a plurality of steam loops.

In some embodiments, the heat pump is configured to provide a coefficient of performance of at least 1, wherein the coefficient of performance is calculated according to the following formula: $Coefficient of performance = \frac{heat output of the heat pump}{work input to the heat pump}$

In this way, the heat pump is configured to provide an output which provides more heat to the system that it requires in electrical energy. In this way, the energy efficiency of the system is improved.

The work input to the heat pump is the electrical power supplied to the heat pump as measured using a standard power meter. The heat output of the heat pump is the measured steam flow and temperature or pressure of the output.

Preferably, the heat pump is configured to provide a coefficient of performance in the range of 1.5 to 6.

Optionally, the reactor stage comprises an autoclave configured to heat the gypsum slurry and (e.g. at least partially, e.g. fully) convert the gypsum slurry into an alpha hemihydrate slurry. Optionally, one or more reactor units may each comprise an autoclave.

Optionally, the reactor stage comprises a pre-heating reactor unit configured to heat the gypsum slurry to an intermediate temperature before the gypsum slurry is passed into a reactor unit comprising an autoclave (e.g. where the gypsum slurry is heated to an elevated temperature). The intermediate temperature is lower than the temperature to which the gypsum slurry is heated in the autoclave (e.g. the elevated temperature).

Optionally, the reactor stage comprises a pre-pressurisation unit configured to pressurise the gypsum slurry to a desired (e.g. elevated) pressure prior to the gypsum slurry being passed into a reactor unit comprising an autoclave (e.g. where the gypsum slurry is heated to an elevated temperature). In such embodiments, the reactor unit comprising the autoclave is optionally able to maintain the elevated pressure obtained during the pre-pressurisation step such that the heating occurs under pressure.

The dewatering stage is in fluid communication (e.g. and downstream of) the reactor stage such that the alpha hemihydrate slurry is passed into the dewatering stage to remove water. The dewatering stage is thus configured to remove water as both liquid water (via the liquid water output) and as steam (i.e. vapour water) and provide an alpha hemihydrate product that includes less water (i.e. is drier) than the alpha hemihydrate slurry.

Optionally, the dewatering stage comprises a flash tank configured to depressurize and cool the alpha hemihydrate slurry and collect steam. Optionally, the flash tank is in communication with, and downstream of, the reactor stage. Optionally, the flash tank is the first step in the dewatering stage and thus the flash tank directly receives the alpha hemihydrate slurry output from the reactor stage. Optionally, the flash tank is held at a pressure lower than the pressure of the alpha hemihydrate slurry. Optionally, the flash tank acts as a steam source allowing for the lower pressure within the flash tank. As such, when the alpha hemihydrate slurry is passed into the flash tank, at least some of the water (e.g. the solvent) of the alpha hemihydrate slurry is vaporised into steam, thus reducing the amount of water (e.g. dewatering) the alpha hemihydrate slurry. Optionally, the flash tank comprises a steam output. In other words, optionally, the dewatering stage comprises a first steam output associated with the flash tank. Optionally, the dewatering stage comprising a multistage flash tank comprising a series of flash tanks, wherein each flash tank comprises a steam output. Optionally, the steam outputs of one or more of the flash tanks are in fluid communication with the heat pump input. In this way, the heat of the output of the flash tanks can be reused to provide a system with increased energy efficiency.

Optionally, the dewatering stage comprises a belt filter. Optionally, the belt filter is in communication with, and downstream of, the flash tank such that the alpha hemihydrate slurry is passed from the flash tank to the belt filter. Any suitable and/or desirable belt filter arrangement (sometimes referred to as a belt press filter or belt filter press) can be used. Optionally, the belt press comprises a liquid water output, a steam output and an alpha hemihydrate product output. As such, optionally, the steam output from the dewatering stage comprises a first steam output associated with the flash tank and a second steam output associated with the belt filter.

The water extracted from the alpha hemihydrate slurry in the dewatering stage (e.g. the belt filter) is optionally provided at a temperature less than 100°C. Optionally, the temperature of the liquid water extracted from the alpha hemihydrate slurry in the dewatering stage is above room temperature (e.g. 20°C). Optionally, the temperature of the liquid water extracted from the alpha hemihydrate slurry in the dewatering stage is from 30°C to 90°C, preferably from 30°C to 70°C, e.g. from 40°C to 60°C, e.g. approximately 50°C.

Optionally, the system further comprises a filtrate unit in fluid communication with the liquid water output of the dewatering stage, wherein the filtrate unit comprises a container. The filtrate unit can thus collect and store liquid water and provide a water source for the mixing stage. Optionally, the output of the dewatering stage is in fluid communication with the filtrate unit such that the latent and sensible heat of the steam is used as a heating source to reduce the energy requirements of the heating in the system. As such, the mixing stage, the reactor stage, the dewatering stage and the filtrate unit may be considered to provide a continuous and/or system for water to flow through the system.

Optionally, the filtrate unit comprises a container in which the liquid water output from the dewatering stage is collected. Optionally, the liquid water is allowed to sit in the container such that any residual alpha hemihydrate or gypsum solid is allowed to settle at the bottom of the container. Optionally, the filtrate unit may further comprise a filter configured to separate any solid residue from the liquid water output from the dewatering stage. The filter may be any suitable and/or desirable filter. For example, a gravity filter may be used whereby the filter physically prevents solid particulate material (e.g. alpha hemihydrate solid or gypsum solid material) from passing through a mesh, membrane or barrier. For example, centrifugal filtration may be used.

It will be appreciated that steam is gaseous or vapour water. As such, steam has a temperature that is at least 100°C at ambient pressure. The temperature of the steam is univocally related to the pressure of the steam, as such, as the pressure increases, the temperature of the steam increases. Optionally, the steam generated in the dewatering stage (e.g. output from the flash tank and/or the belt filter) has a temperature from 100°C to 150°C, e.g. from 105°C to 110°C, e.g. from 120°C to 135°C. As such, the steam generated in the dewatering stage comprises latent and sensible energy that can be used as a heating source for any of the preceding stages in the process that involve heating.

Optionally, the system comprises a heating control system for controlling the output of the heat pump. Preferably, the heating control system comprises at least one temperature sensor. Preferably, the temperature sensor is located within the reactor stage or the mixing stage. More preferably, the heating control system comprises a computer processor configured to control the heat pump to maintain a heating parameter within a desired range. For example, the heating control centre may be configured to increase the energy supplied to the heat pump if the temperature sensor detects the temperature in the mixing or reactor stage is below a desired value. For example, the heating control centre may be configured to decrease the energy supplied to the heat pump if the temperature sensor detects the temperature in the mixing or reactor stage is above a desired value. In this way, the system may provide increased efficiency and versatility. The heating control system may be configured to adjust the electric current supplied to the heat pump, the electrical resistance of an element within the heat pump, the time period for which electrical power is supplied to the heat pump and/or the time period for which electrical power is not supplied to the heat pump, amongst other parameters. In some embodiments, the system comprises a computer processor configured to control an alternative heat source such as a gas boiler configured to provide additional steam. In this way, the system may provide increased efficiency and versatility, for example by only using external heat sources such as gas boilers when required.

In a second aspect, a method of forming alpha calcium sulphate hemihydrate in a wet calcination process is provided (e.g. using the system of the first aspect). The method comprises:
providing (e.g. in the mixing stage of the first aspect) a gypsum slurry by mixing gypsum with (e.g. pre-heated or unheated) water from a water source;
calcining the gypsum slurry (e.g. in the reactor stage of the first aspect) to provide an alpha hemihydrate slurry;
removing water from the alpha hemihydrate slurry in a dewatering stage;
removing water from the dewatering stage, providing the water removed to a heat pump input, the heat pump providing a heat pump output with a higher temperature than the input, the heat pump extracting heat from the water of the dewatering stage to increase the temperature of a carrier medium as the heat pump output,
and using the output of the heat pump as a heat source to heat one or more of the water source, the mixing stage, and the reactor stage.

The second aspect thus provides a novel method for the manufacture of alpha calcium sulphate hemihydrate that redirects the water, such as steam or liquid water, that is removed from the alpha hemihydrate slurry to a heat pump, such that the latent and/or sensible heat energy stored therein can be recycled and used as a heat source for at least one of the stages in the manufacturing process. As such, the energy requirements of the method are reduced and the energy efficiency of the system is improved, thus allowing alpha hemihydrate products to be produced with less environmental impact (e.g. with a reduced CO₂ footprint and reduced water consumption) and more economically.

It should be appreciated from the above that the first aspect may be used to perform the method of the second aspect. As such, the features outline above with respect to the first aspect apply equally to the second aspect. Furthermore, the following features and embodiments of the second aspect may be combined in any suitable and/or desirable way to provide an embodiment of the second aspect falling within the scope of the appended claims.

Optionally, the method may comprise pre-heating the water to an elevated temperature prior to supplying the water into the mixing stage. Optionally, the output of the heat pump is used as the heat source for pre-heating the water to an elevated temperature. As such, the method may comprise pre-heating the water to a temperature above 50°C, e.g. a temperature from 50°C to 99°C before supplying the water (e.g. to the mixing chamber) to be used to provide the gypsum slurry.

The method comprises passing the gypsum slurry (e.g. from the mixing stage, e.g. from a mixing tank) to a reactor stage (e.g. to a reactor forming part of a reactor stage which may comprise one or more reactors) where the step of calcining the gypsum slurry is carried out (e.g. conducted, e.g. performed).

Preferably the method comprises removing water from the dewatering stage of a predetermined temperature. Optionally, the predetermined temperature is from 40 to 110 °C, e.g. from 50 to 100 °C, e.g. from 40 to 90 °C.

Optionally, the step of calcining the gypsum slurry further comprises heating the gypsum slurry to an elevated temperature and/or pressurising the gypsum slurry (or the environment surrounding the gypsum slurry) to an elevated pressure. Optionally, the elevated temperature is from 110°C to 170°C, preferably from 120°C to 160°C, more preferably from 130°C to 150°C. Optionally, the elevated pressure from 1.5 bar to 10 bar, preferably 2 bar to 8 bar, more preferably 3 bar to 5 bar. Optionally, heating and pressurising the gypsum slurry occur sequentially (e.g. in a step-wise manner) or simultaneously (e.g. in the same reactor).

Optionally, the heat pump provides an output with a temperature from 100°C to 250°C, preferably from 120°C to 220°C, more preferably from 180°C to 220°C, and more preferably from 190°C and 210°C. In this way, the output of the heat pump may be used to provide the preferable temperatures of the reactor stage. In some embodiments, the heat carrier medium is air or steam. In embodiments using air as the heat carrier medium, the system preferably provides the heat pump output with a temperature in the range of 100°C to 200°C, more preferably 120°C to 170°C, more preferably 140°C to 160°C, and most preferably at approximately 150°C. In embodiments using steam as the heat carrier medium, the system preferably provides the heat pump output with a temperature in the range of 120°C to 250°C, more preferably in the range of 140°C to 220°C, more preferably 160°C to 200°C, most preferably at approximately 180°C.

Optionally, the reactor stage comprises one or more (e.g. two, e.g. a plurality) of reactor units. Optionally, the method comprises heating a first reactor to the elevated temperature and pressurising a second reactor to the elevated pressure, wherein the first reactor is in fluid communication with, and upstream or downstream of, the second reactor. Optionally, at least the heating sub-step of the calcination step occurs within an autoclave. Optionally, the heating and pressurisation sub-steps of the calcination step occur simultaneously within an autoclave.

Optionally, the method comprises heating the gypsum slurry to an intermediate temperature prior to heating the gypsum slurry to the elevated temperature for the calcination step. For example, the intermediate temperature is lower than the temperature to which the gypsum slurry is heated in the autoclave (e.g. the elevated temperature).

Optionally, the method comprises pressurising the gypsum slurry to an intermediate pressure prior to heating and/or pressurising the gypsum slurry to the elevated temperature and/or elevated pressure required for the calcination step.

After the step of calcining the gypsum slurry, the resulting alpha hemihydrate slurry is fluidly passed into a dewatering stage and the method comprises removing water from the alpha hemihydrate slurry to provide an alpha hemihydrate product.

Optionally, the method comprises cooling the alpha hemihydrate slurry to a lower temperature than the elevated temperature used for the calcination process. Optionally, the method comprises passing the alpha hemihydrate slurry (e.g. from a reactor stage) into a flash tank for depressurizing of hemihydrate slurry at ambient pressure, that subsequently induces cooling at water vapor equilibrium temperature, i.e. 100°C. Optionally, the method comprises generating steam in the cooling step. Optionally, the method comprises outputting steam from the flash tank used in the colling step.

Optionally, the method comprises removing water from the alpha hemihydrate slurry using a belt filter. Optionally, the method comprises passing the alpha hemihydrate slurry from the reactor stage directly into the belt filter (i.e. without first passing through a cooling stage such as a flash tank). Optionally, the method comprises cooling the alpha hemihydrate slurry (e.g. in a flash tank) prior to passing the alpha hemihydrate slurry into a belt filter. Optionally, the method comprises removing water as liquid water and steam in the belt filter. Optionally, the method comprises outputting steam (e.g. via a steam output) and outputting liquid water (e.g. via a liquid water output) from the belt filter.

Optionally, the method comprises filtering the liquid water (e.g. in the filtrate unit) removed from the alpha hemihydrate slurry (e.g. in the dewatering stage, e.g. in the belt filter). Optionally, the method comprises outputting the liquid water removed from the alpha hemihydrate slurry to a filtrate unit. Optionally, the method further comprises using the liquid water (e.g. in the filtrate unit) as the water for providing the gypsum slurry.

The water removed from the dewatering stage is used as a heating source for the heat pump for the method.

Optionally, the method comprises increasing the temperature of at least a portion of the water output from the dewatering stage. In this way, the water output can be reused in the system, reducing the water requirements of the system. Thus, the system provides increased energy efficiency and increased water efficiency.

The method comprises using the heat pump to extract heat from the water output of the dewatering stage to heat a carrier medium, such as dry air, additional water or additional steam, or any other type of thermal fluid (such as thermal oil). In this way, the method forms an open steam loop with additional steam supplied to the system. In some embodiments, the method comprises supplying additional steam from a component of a gypsum product production system. For example, supplying additional steam from a dryer in a gypsum plasterboard production system. In some embodiments, the method comprises supplying additional steam to a component of a gypsum product production system. For example, supplying additional steam to a dryer in a gypsum plasterboard production system. In this way, the overall energy requirements of the calcination and product production system may be reduced. Additionally, in this way any impurities carried from the water output of the dewatering stage carried through the to the heat pump output would not be reintroduced into the gypsum slurry. In this way, the system may provide an output with reduced water soluble impurities.

Optionally, the temperature of the water is increased (e.g. with respect to the temperature of the water removed from the mixing stage, e.g. with respect to the temperature of the water removed from the reactor stage) by at least 90 °C, e.g. by at least 100 °C, e.g. by at least 130 °C, e.g. by at least 150 °C, e.g. by up to 160 °C.

Optionally, the method comprises using the output of the heat pump to heat the water source, the mixing stage, and/or reactor stage directly, for example by adding the output of the heat pump to a tank of the mixing and/or reactor stage, or by adding the output of the heat pump to the water source to be added to the mixing stage. In this way, the water requirement of the system may be reduced.

Optionally, the method comprises using the output of the heat pump to heat the water source, the mixing stage, and/or reactor stage indirectly, for example by filling a thermal jacket surrounding a tank of the mixing and/or reactor stage to allow the output of the heat pump to heat the mixing and/or reactor stages without contacting the gypsum slurry. In this way, the output of the heat pump can be used to heat the water source, the mixing stage, and/or reactor stage without changing the water content of the mixing and/or reactor stage. .

Optionally, the method comprises controlling the function heat pump in response to a parameter of the system, for example the temperature of the water source, the mixing stage, and/or the reactor stage. For example, the method may comprise increasing the energy supplied to the heat pump if a temperature sensor detects the temperature in the water source, the mixing stage, or the reactor stage is below a desired value. For example, the method may comprise decreasing the energy supplied to the heat pump if a temperature sensor detects the temperature in the water source, the mixing stage or the reactor stage is above a desired value. In this way, the method may provide increased efficiency and adjustability. The method may comprise adjusting the electric current supplied to the heat pump, the electrical resistance of an element within the heat pump, the time period for which electrical power is supplied to the heat pump and/or the time period for which electrical power is not supplied to the heat pump, amongst other parameters. In some embodiments, the method may comprise varying the output of an alternative heat source such as a gas boiler configured to provide additional steam. In this way, the method may provide increased efficiency and versatility, for example by only using external heat sources such as gas boilers when required.

### BRIEF DESCRIPTION OF DRAWINGS

The disclosure will be further described with reference to examples depicted in the accompanying figures in which:
Figure 1 is a schematic diagram showing a system in accordance with an embodiment of the first aspect;
Figure 2 is a schematic diagram showing a system in accordance with an embodiment of the first aspect;
Figure 3 is a flow diagram showing a method in accordance with an embodiment of the second aspect;
Figure 4 is a schematic diagram showing a system in accordance with an embodiment of the first aspect; and
Figure 5 is a schematic diagram showing a system in accordance with an embodiment of the first aspect.

### DETAILED DESCRIPTION

The following description presents particular examples and, together with the drawings, serves to explain principles of the disclosure. However, the scope of the invention is not intended to be limited to the precise details of the examples, since variations will be apparent to a skilled person and areas deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

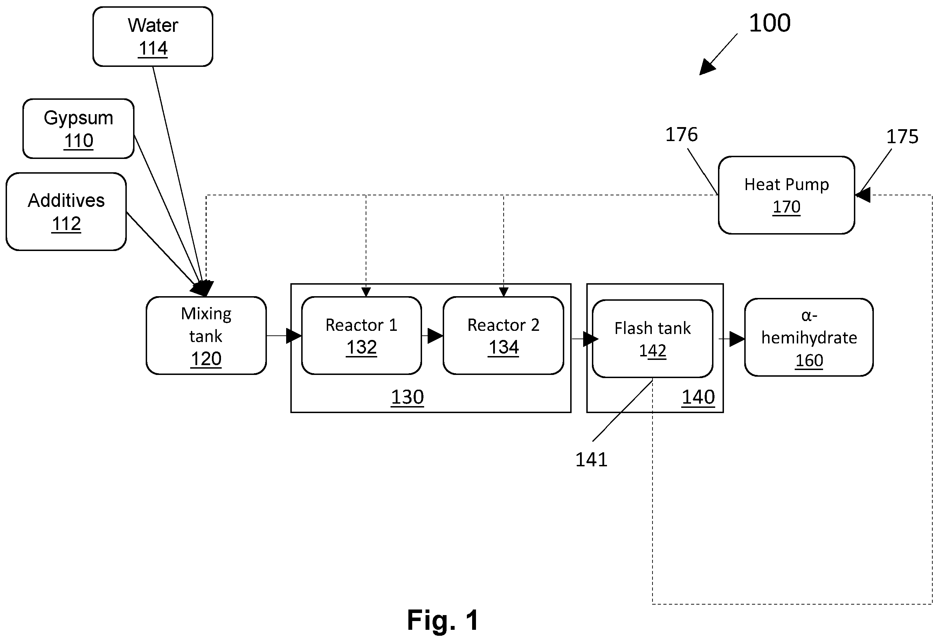

Figure 1 shows a schematic representation of a system 100 that can be used to produce an alpha hemihydrate product 160. The system 100 includes a gypsum source 110 that provides gypsum to a mixing stage 120 where the gypsum is mixed with water to provide a gypsum slurry. The mixing stage 120 thus includes any suitable and/or desirable means to effectively mix the gypsum (and any other additives or components to be included within the slurry) with water. Optionally, the mixing stage may include sensors to determine when the right consistency of slurry has been produced.

Once the gypsum slurry has been produced in the mixing stage 120, the gypsum slurry is transferred (e.g. via a conduit) to the reactor stage 130. The reactor stage 130 is the stage in the process where the gypsum slurry is calcinated to provide an alpha hemihydrate slurry. Calcination is a known process and may be performed in any suitable and/or desirable way known in the art. This often involves heating and/or pressurising the gypsum slurry to an elevated temperature and pressure which may be performed in a single step or in a plurality of sequential steps within the reactor stage 130. In system 100, the calcination process is carried out in a first reactor tank 132 and a second reactor tank 134.

Once the alpha hemihydrate slurry (i.e. a flowable mixture of alpha hemihydrate with water as a flowable slurry) has been provided (i.e. by calcination), the mixture is passed into the dewatering stage 140 of the system 100 where water is removed from the alpha hemihydrate slurry to provide an alpha hemihydrate product 160 (which comprises less water than the alpha hemihydrate slurry, but is not itself necessarily dry, e.g. it may be a "moist" product). The dewatering stage 140 may be formed by any suitable and/or desirable process or equipment that separates water out from the alpha hemihydrate slurry. For example, the dewatering stage 140 may be formed by a belt filter or any other suitable and/or desirable filtering process.

Water is removed from the dewatering stage 140 via water output 141. The water removed via the water output 141 may be liquid water or water vapour. The water output is passed to a heat pump 170 before it is used to heat the mixing tank 120 and the reactor tanks 132 and 134. As such, the latent and sensible heat of the waste steam is used as a heating source and thus reduces the energy requirements for heating in the system.

Once the gypsum slurry has been produced in the mixing stage 120, the gypsum slurry is transferred (e.g. via a conduit) to the reactor stage 130. In this example, the reactor stage 130 includes two reactors 132, 134 (although there is no limit on the number of reactors that may be included, two are just depicted for simplicity). A plurality of reactors may be used to provide more control over the calcination process. For example, the plurality of reactors may be used to increase the temperature in a stepwise manner to allow more precise control over the temperature of the gypsum slurry within the reactor and an improvement in the heat transfer efficiency due to the increased surface area with respect to a single reactor.

The heat pump 170 provides an output 176 with an increased temperature relative to the input 175. As discussed above, the heating may be performed in any suitable and/or desirable way. For example, the steam may be used to flood a heating jacket around a tank that forms one or both of the reactors 132, 134. For example, the steam may be inserted into the reactors 132, 134 such that the steam has a dual function as a heating source and a further source of water in addition to the liquid water introduced in the mixing stage 120.

Once the calcination process has been completed within the reactor stage 130 (i.e. converting the gypsum slurry to an alpha hemihydrate slurry), the resulting alpha hemihydrate slurry is passed into the dewatering stage 140 where water is removed to provide an alpha hemihydrate product 160. In this example, the dewatering stage includes a flash tank 142 which cools the alpha hemihydrate slurry and generates steam.

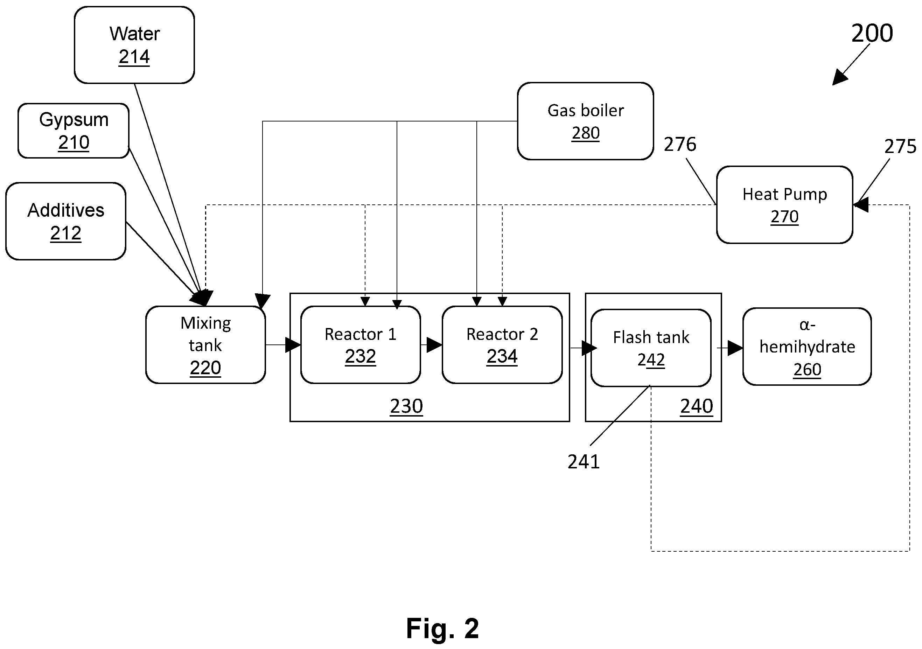

Figure 2 shows a schematic representation of a system 200 that is similar in nature to the system 100 shown in Figure 1 and can be used to produce an alpha hemihydrate product 260.

As with system 100, system 200 includes a gypsum source 210 that provides gypsum to a mixing stage 120 where the gypsum is mixed with water to provide a gypsum slurry. In this example, system 200 also includes an external steam source, the gas boiler 280 which is used to supplement the heating of the mixing and reactor stages by the heat pump output 276.

The dashed lines shown in Figures 1 and 2 are intended to represent possible steam flow paths and are not intended to be limiting. As such, the systems 100, 200 may only include one of the steam flow paths shown and are not intended to be interpreted as necessarily including all of the flow paths. For example, in some embodiments, the steam may only flow to the mixing stages 120, 220 to be used as a source of heat. Thus, any suitable and/or desirable combination or arrangement of steam flow paths may be selected depending on the heat requirements and processes performed by the system.

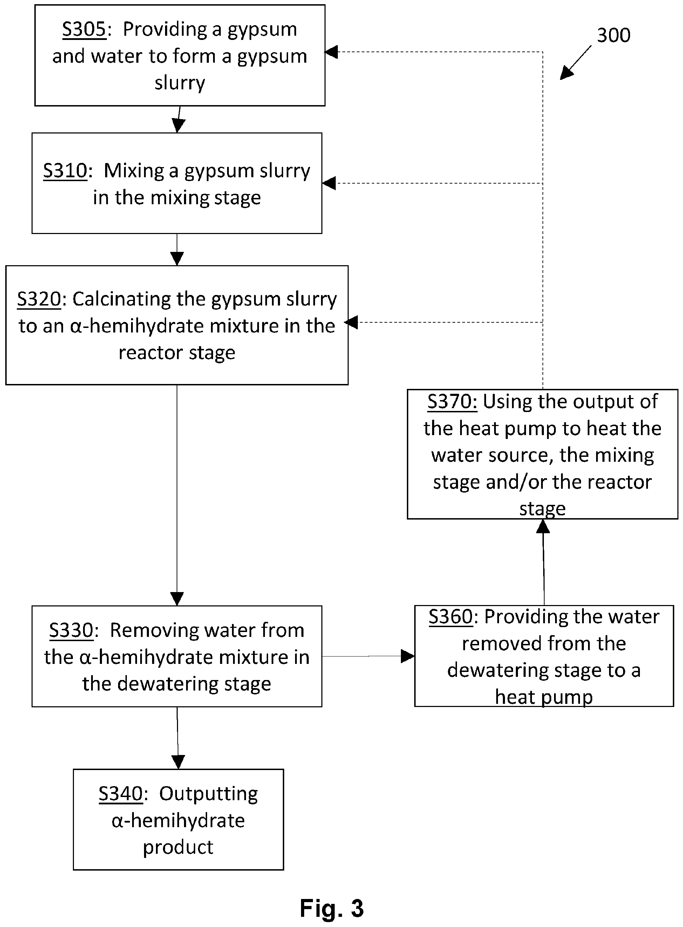

Figure 3 shows an exemplary method 300 that may be used (and performed in systems 100-200 shown in Figures 1 and 2) to provide an alpha hemihydrate product. The method 300 first includes providing (in step 305) gypsum and water to provide a gypsum slurry.

The method then involves mixing (in step 310) the gypsum slurry in a mixing stage, such as the mixing stages 120, 220, shown in Figures 1-2.

In a next step, the method includes calcining (step 320) the gypsum slurry (e.g. in the reactor stages 130, 230, shown in Figure 1-2) to provide an alpha hemihydrate slurry.

The method then involves removing water (step 330) from the alpha hemihydrate slurry (e.g. in the dewatering stage 140, 240, of Figures 1-2) as liquid and/or steam. The method then outputs the alpha hemihydrate product (in step 340).

The liquid water which is extracted from the alpha hemihydrate slurry in the dewatering stage (e.g. dewatering stage 140, 240,of Figures 1-2) is then provided to a heat pump (in step 360). The heat pump then uses the water output of the dewatering stages as a heat source to provide a heat pump output with a higher temperature. The heat pump extracts heat from the water output from the dewatering stage to heat a carrier medium to provide the heat pump output with a higher temperature.

The method then involves (in step 370) using the output of the heat pump to heat the water source, the mixing stage and/or the reactor stage.

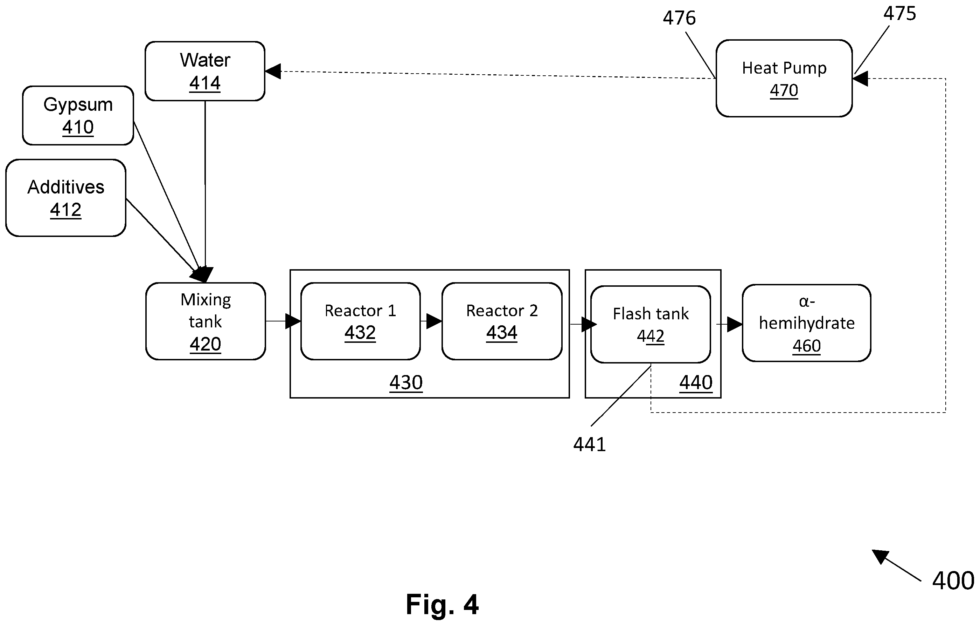

Figure 4 shows a schematic representation of a system 400 that is similar in nature to the system 100 shown in Figure 1 and can be used to produce an alpha hemihydrate product 460.

As with system 100, system 400 includes a gypsum source 410 that provides gypsum to a mixing stage 420 where the gypsum is mixed with water to provide a gypsum slurry. In this example, system 400 uses the output of the heat pump 470 to heat the water source 414. The heat pump 470 uses the input 475 from the dewatering stage 440 to heat a carrier medium to heat the water source 414. In this way, the energy requirements of the system are reduced.

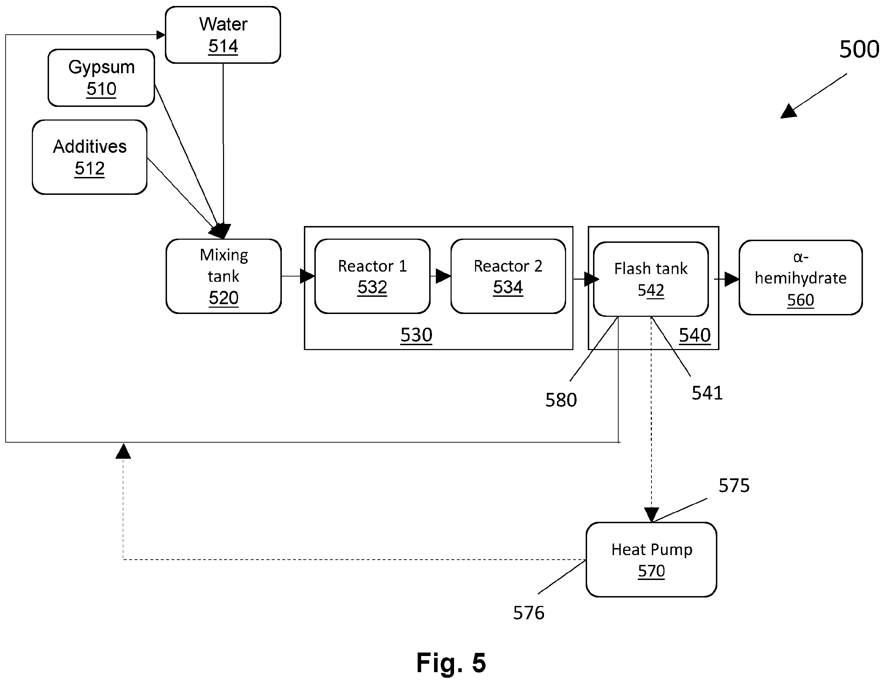

Figure 5 shows a schematic representation of a system 500 that is similar in nature to the system 400 shown in Figure 4 and can be used to produce an alpha hemihydrate product 560.

As with system 400, system 500 includes a gypsum source 510 that provides gypsum to a mixing stage 520 where the gypsum is mixed with water to provide a gypsum slurry. In this example, system 500 comprises a water output 580 from the dewatering stage 540. The water output 580 is fluidly connected to the water source 514. In this way, the output water 580 of the dewatering stage 540 is recirculated into the process. In system 500, the heat pump output 576 is used to heat the recirculated water 580 from the dewatering stage 540. In this way, both the energy requirements and the water requirements of the system are reduced.

Systems 100, 200, 400 and 500 have heat pumps 170, 270, 470 and 570. The water output of the dewatering stage is used by the heat pump to heat a carrier medium such as additional steam. The carrier medium such as additional steam is used to heat a stage upstream of the dewatering stage.

The present invention thus provides an improved system and method for producing alpha hemihydrate (e.g. gypsum based) products which are suitable for use as building materials (e.g. plasterboard). The scope of the present disclosure however is limited only by the appended claims.

## Claims

1. A system for producing alpha calcium sulphate hemihydrate via a wet calcination process, the system comprising:
a mixing stage in fluid communication with a gypsum source and one or more water sources, wherein the mixing stage is configured to mix gypsum with water and output a gypsum slurry;
a reactor stage in fluid communication with the mixing stage, wherein the reactor stage is configured to convert the gypsum slurry into an alpha hemihydrate slurry;
a dewatering stage in fluid communication with the reactor stage, wherein the dewatering stage is configured to remove water from the alpha hemihydrate slurry, wherein the dewatering stage comprises an output for outputting an alpha hemihydrate product;
a heat pump comprising an input and an output;
wherein the dewatering stage comprises a water output, the water output in fluid communication with the heat pump input,
the heat pump output in fluid communication with the water source, the mixing stage, and/or the reactor stage, wherein the heat pump is configured to provide the output with a higher temperature than the input; and
wherein the heat pump is configured to extract heat from the water output of the dewatering stage to heat a carrier medium as the heat pump output.

2. The system of claim 1, wherein the output of the heat pump is in fluid communication with both the mixing stage and the reactor stage.

3. The system of claim 1 or claim 2, wherein the heat pump is configured to increase the temperature of the heat pump input by at least 90 °C.

4. The system of claim 3, wherein the heat pump is configured to increase the temperature of the heat pump input by up to 160 °C.

5. The system of any preceding claim, wherein the reactor stage is configured to heat the gypsum slurry to a temperature in the range of 110-170 °C inclusive.

6. The system of any one preceding claim, wherein the heat pump is configured to provide a coefficient of performance of at least 1, wherein the coefficient of performance is calculated according to the following formula: $Coefficient of performance = \frac{heat output of the heat pump}{work input to the heat pump}$

7. The system of claim 6, wherein the heat pump is configured to provide a coefficient of performance in the range of 1.5 to 6 inclusive.

8. The system of any one of the preceding claims, wherein the reactor stage comprises one or more reactor units, preferably wherein the one or more reactor units are arranged in series.

9. The system of claim 8, wherein each of the one of more reactor units comprises a water output fluidly connected to the heat pump.

10. The system of any one of the preceding claims, wherein the dewatering stage comprises an output in fluid communication with the water source.

11. A method of forming alpha calcium sulphate hemihydrate, the method comprising:
providing a gypsum slurry by mixing gypsum with water from a water source in a mixing stage;
calcining the gypsum slurry to provide an alpha hemihydrate slurry in a reactor stage;
removing water from the alpha hemihydrate slurry in a dewatering stage;
removing water from the dewatering stage, providing the water removed to a heat pump input,
the heat pump providing a heat pump output with a higher temperature than the input, the heat pump extracting heat from the water of the dewatering stage to increase the temperature of a carrier medium as the heat pump output,
and using the output of the heat pump as a heat source to heat one or more of the water source, the mixing stage, and the reactor stage.
